# EUROPÄISCHE PATENTANMELDUNG

(11) **EP 1 533 113 A1**
(43) Veröffentlichungstag der Anmeldung: **25.05.2005**
(21) Anmeldenummer: 03026281.0
(22) Anmeldetag: 14.11.2003
(51) Int. Cl.: B32B 5/14, B32B 15/00, B32B 18/00, F01D 5/28, F01D 5/14, F23R 3/00

(54) **Hochtemperatur-Schichtsystem zur Wärmeableitung und Verfahren zu dessen Herstellung**

(71) Anmelder: SIEMENS AKTIENGESELLSCHAFT, 80333 München (DE)
(72) Erfinder: Heselhaus, Andreas, Dr., 40233 Düsseldorf (DE)

(57) **Zusammenfassung**

Schichtsysteme nach dem Stand der Technik weisen eine nicht effiziente Kühlung gegen ein äußeres heißes Gas auf.

Das erfindungsgemäß ausgebildete Schichtsystem (1) weist eine äußere poröse Schicht (10) auf, wobei die Porenwände (22) der Poren (25) eine unterschiedliche Dicke der Porenwände (22) aufweisen.

Somit kann die Kühlung unter Schutz vor zu hohem Wärmeeintrag für das Schichtsystem (1) verbessert werden.

## Beschreibung

Die Erfindung betrifft ein Schichtsystem nach Anspruch 1 und ein Verfahren zur Herstellung eines Schichtsystems nach Anspruch 27 bzw. 33.

Die US-PS 3,825,364 zeigt eine äußere Wand, die vollkommen porös ausgebildet ist. Zwischen dieser tragenden Wand und einem Substrat ist ein Hohlraum vorhanden.

Die US-PS 5,080,557 zeigt eine Schichtstruktur aus einem Substrat, einer porösen Zwischenschicht und einer absolut dichten äußeren Schicht.

Die US-PS 4,318,666 zeigt im Vergleich zur US-PS 5,080,557 zusätzliche Kühlkanäle in dem Substrat, auf dem eine poröse Zwischenschicht und eine dichte äußere Schicht aufgebracht ist.

Die JP 10-231 704 zeigt ein Substrat mit Kühlkanälen und einer porösen Zwischenschicht.

Die WO03/006883 sowie die US 6,412,541 zeigen eine poröse Struktur innerhalb einer tragenden Wand, wobei die Wand wiederum außen eine Beschichtung aufweist. Die Wand und die Beschichtung weisen Kühlkanäle auf.

Die Schichtstrukturen weisen jedoch eine schlechte Kühlung auf.

Es ist daher die Aufgabe der Erfindung, die Kühlung in einer Schichtstruktur zu verbessern.

Die Aufgabe wird gelöst durch eine Schichtstruktur gemäß Anspruch 1 und ein Verfahren zur Herstellung einer Schichtstruktur nach Anspruch 27 bzw. 33.

In den Unteransprüchen sind weitere vorteilhafte Maßnahmen aufgelistet.
Die in den Unteransprüchen aufgelisteten Maßnahmen können in vorteilhafter Art und Weise miteinander kombiniert werden.

Ausführungsbeispiele der Erfindung sind in den Figuren erläutert.

Es zeigen:
- Figur 1 bis 6: beispielhafte Schichtsysteme im Querschnitt,
- Figur 7 bis 17: eine vergrößerte Darstellung einer porösen Schicht,
- Figur 18 bis 24: Verfahrensschritte zur Herstellung eines erfindungsgemäßen Schichtsystems,
- Figur 25: eine Gasturbine, und
- Figur 26: eine Brennkammer.

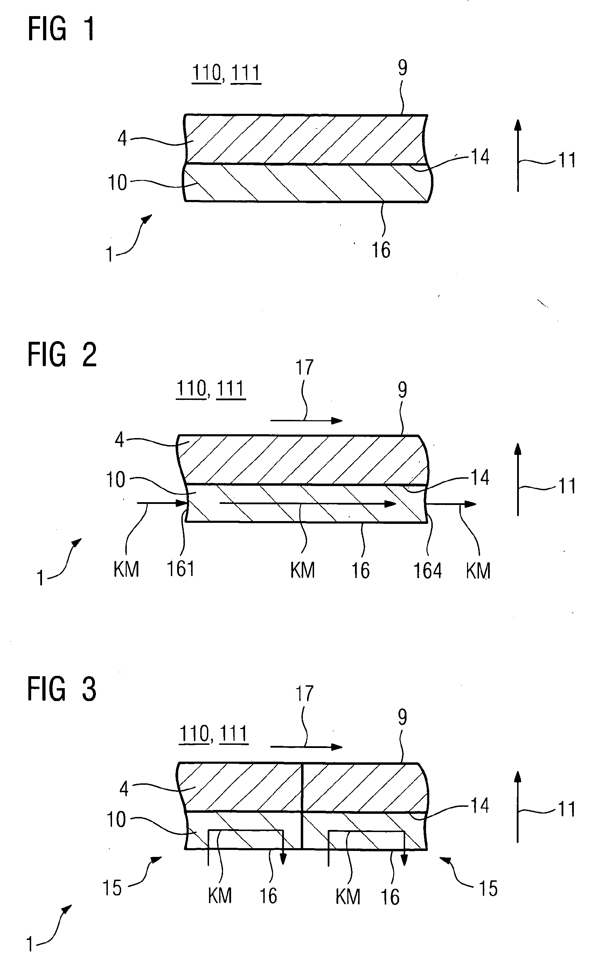

Figur 1 zeigt ein erstes Ausführungsbeispiel eines erfindungsgemäßen Schichtsystems 1.

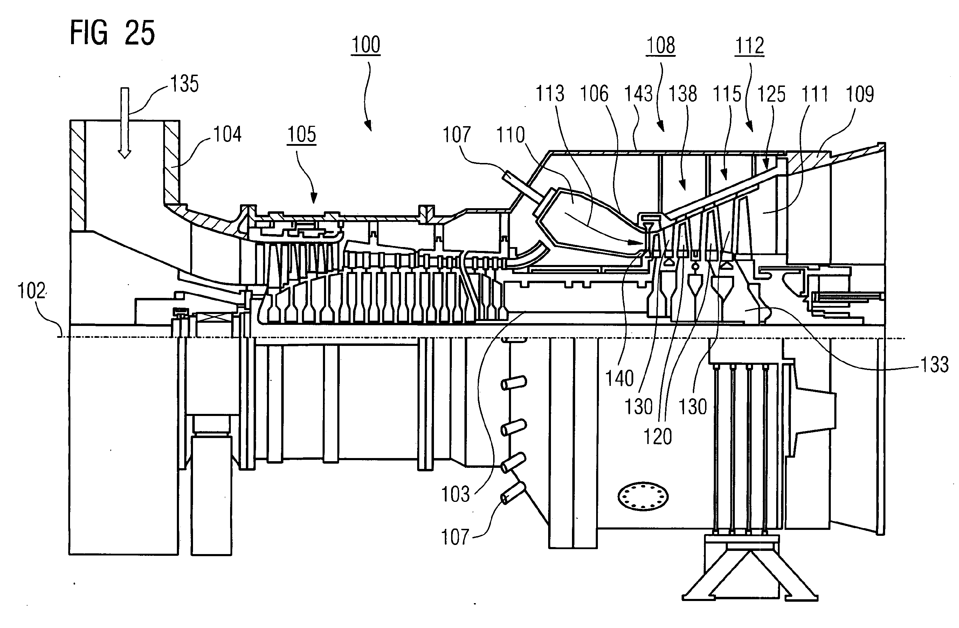

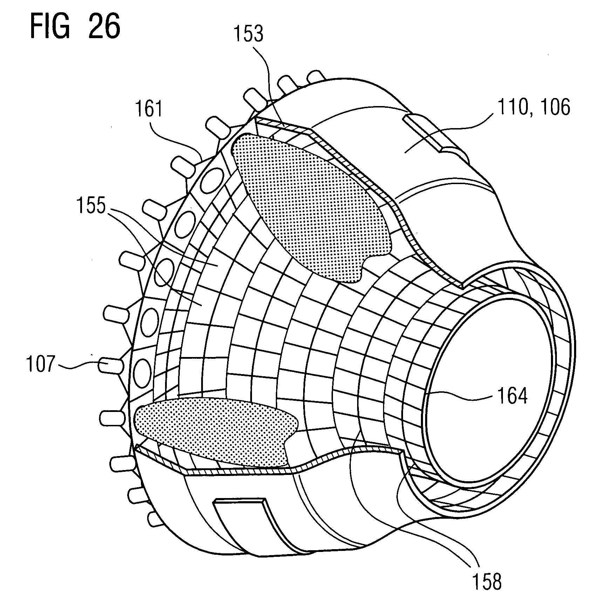

Das Schichtsystem 1 besteht aus einem Substrat 4.
Das Substrat 4 kann metallisch und/oder keramisch sein. Insbesondere bei der Anwendung für Turbinenbauteile einer Strömungsmaschine wie Gas- 100 (Fig. 25, aber auch Flugzeugturbine möglich) oder Dampfturbine, wie z.B. Turbinenschaufeln 120, 130 (Fig. 25) oder Brennkammerauskleidungen 155 (Fig. 26), ist das Substrat 4 eine eisen-, nickel- oder kobaltbasierte Superlegierung.

Das Schichtsystem 1 mit seinem Substrat 4 ist an einer Oberfläche 9 mittelbar oder unmittelbar an einen Bereich 110, 111 (Fig. 25) angrenzt, der ein heißes Medium aufweist. Dieser Bereich 110, 111 ist beispielsweise eine Brennkammer 110 oder ein Heißgaskanal 111 einer Gasturbine 100 (Fig. 25).
Auf der Oberfläche 9 können in bekannter Art und Weise Schutzschichten (MCrAlX) gegen Oxidation und Korrosion und/oder Wärmedämmschichten (ZrO2) vorhanden sein.

Eine Radialrichtung 11 verläuft senkrecht oder nahezu senkrecht zur Oberfläche 9 des Substrats 4.

Trotz dieser Schutzmaßnahmen gegen zu viel Wärmeeintrag wird das Substrat 4 an einer Oberfläche 14, die der Oberfläche 9 gegenüber liegt, noch zusätzlich gekühlt. Das Schichtsystem 1 ist also in diesem Fall beispielsweise ein hohles Bauteil (z. B. hohle Turbinenschaufel) mit einer inneren Oberfläche 14. Das Substrat 4 wird gekühlt, indem ein Kühlmedium KM durch das hohle Bauteil herangeführt wird, das die Wärme aus dem Substrat 4 an der Oberfläche 14 abführt.
Erfindungsgemäß erfolgt dies durch eine poröse Schicht 10, die auf der Oberfläche 14 des Substrats 4 vorhanden ist, um diese Wärme besser an das Kühlmedium abführen zu können.

Zwischen der porösen Schicht 10 und dem Substrat 4 kann eine beispielsweise metallische Haftvermittlerschicht vorhanden sein.
Die vorstehenden Ausführungen für das Schichtsystem mit dem Substrat 4 und der Schicht 10 gelten analog auch für das Schichtsystem mit dem Substrat 4 / Zwischenschicht und Schicht 10.

Das Kühlmedium KM kann an der freien Oberfläche der porösen Schicht 10 vorbeiströmen oder zumindest teilweise durch die poröse Schicht 10 strömen (Figur 2, 3 4).

Die Figuren 2, 3, 4 zeigen, wie ein Kühlmedium KM durch diese poröse Schicht 10 strömen kann.

In Figur 2 strömt das Kühlmedium in einer Axialrichtung 17 (Strömung eines Heißgases in 110, 111, senkrecht zur Radialrichtung 11) durch die gesamte poröse Schicht 10.
Im Fall der Brennkammer 110 wird das Kühlmedium KM an einem Ende zugeführt und strömt von einem axialen Ende 161 zu dem anderen Ende 164 (Fig. 26). Dabei besteht die poröse Schicht beispielsweise aus Röhren, die sich in Axialrichtung 17 erstrecken.
Andere Anordnungen sind denkbar.
Entsprechendes gilt für den Heißgaskanal 111.

Ebenso kann die poröse Schicht 10 in Axialrichtung 17 in verschiedene Segmente 15 (Fig. 3) aufgeteilt sein, wobei das Kühlmedium KM jeweils separat einem solchen Segment 15 zugeführt wird und dieses durchströmt.
Im Fall der Brennkammer 110 (Fig. 26) entspricht dem Segment 15 beispielsweise das Hitzeschildelement 155 (Fig. 26).

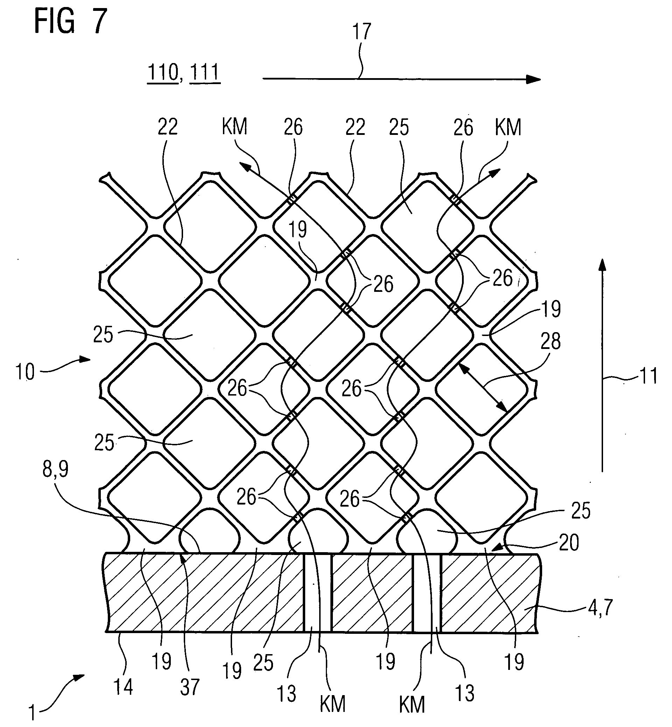

Durch die Segmente 15 wird verhindert, dass das Kühlmedium KM aufgrund des Druckunterschieds im Heißgaskanal 111 oder in der Brennkammer 110 die poröse Schicht 10 horizontal (in Axialrichtung 17) durchströmt und sich zu stark erwärmt. Kammerwände können durch Auffüllen von Poren 25 (Fig. 7) in Radialrichtung 11 entstehen, aber auch durch eine entsprechende Anordnung von den Kanälen 26 (Fig. 7) wird eine senkrechte Durchströmung der porösen Schicht 10 erreicht. Dies zeigt auch die WO03/006883, die Teil dieser Offenbarung bzgl. der Anordnung von Segmenten oder Kammern und deren Durchströmung ist.

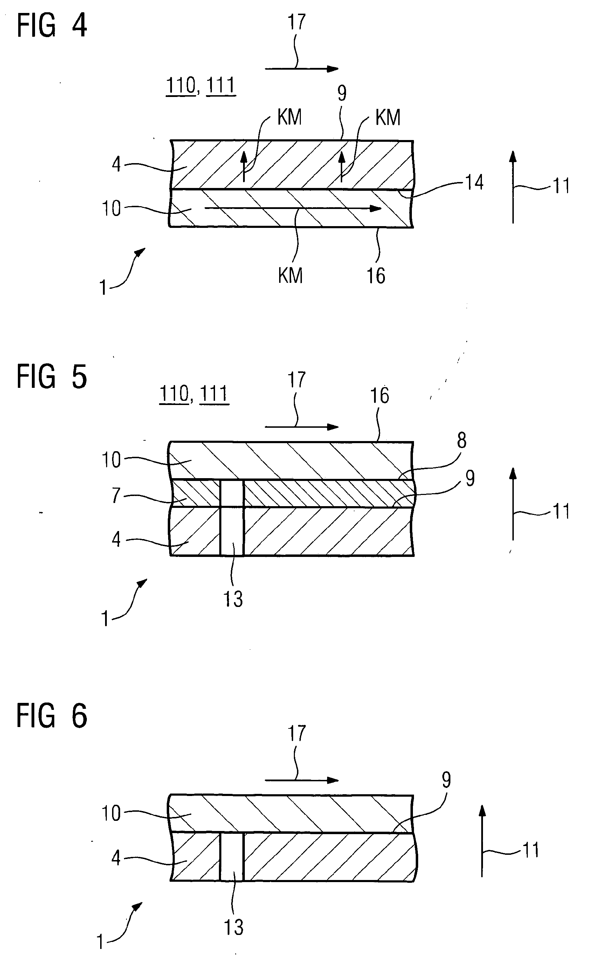

Sowohl bei der Anordnung gemäß Figur 2 und 3 können in dem Substrat 4 Kühlkanäle vorgesehen sein, die es ermöglichen, dass ein Kühlmedium KM aus der porösen Schicht 10 durch das Substrat 4 strömen kann (Fig. 4).
Dabei kann dann auf der Oberfläche 9 des Substrats 4 oder einer Schicht auf dem Substrat 4 eine Filmkühlung erzeugt werden, indem das Kühlmedium KM aus der Oberfläche 9 heraustritt.

Die Figur 5 zeigt ein weiteres Ausführungsbeispiel eines erfindungsgemäßen Schichtsystems 1.

Das Schichtsystem 1 besteht aus einem Substrat 4.
Das Substrat 4 kann metallisch und/oder keramisch sein. Insbesondere bei der Anwendung für Turbinenbauteile einer Gas-100 (Fig. 25) oder Dampfturbine, wie z.B. Turbinenschaufeln 120, 130 (Fig. 25) oder Brennkammerauskleidungen 155 (Fig. 26), ist das Substrat 4 eine eisen-, nickel- oder kobaltbasierte Superlegierung.

Auf dem Substrat 4 ist beispielsweise zumindest eine Zwischenschicht 7 vorhanden. Die Zwischenschicht 7 kann metallisch und/oder keramisch sein.
Auf die Oberfläche 8 der Zwischenschicht 7 ist die äußere poröse Schicht 10 aufgebracht. Auch diese poröse Schicht 10 kann metallisch und/oder keramisch sei.
Durch das Substrat 4 und die Zwischenschicht 7 hindurch führt beispielsweise ein Kühlkanal 13, durch den ein Kühlmedium (Luft und/oder Dampf oder anderes) hinzugeführt werden kann. Das Kühlmedium, das über den Kühlkanal 13 in die poröse Schicht 10 einströmt, kann innerhalb der Schicht 10 fließen oder auch aus der Oberfläche 16 der äußeren Schicht 10 austreten. Wenn das Kühlmedium aus der Oberfläche 16 austritt, findet eine Effusionskühlung statt.
Bezüglich der Zuführung und Strömung des Kühlmediums KM gelten die Ausführungen zu den Figuren 2, 3 und 4 analog.

Die Zwischenschicht 7 ist beispielsweise eine Oxidationsoder Korrosionsschutzschicht, die beispielsweise die Zusammensetzung MCrAlX aufweist, wobei M für zumindest ein Element der Gruppe Eisen, Kobalt oder Nickel steht. X steht für zumindest ein Element der Gruppe Yttrium und/oder der Seltenen Erden bzw. ein Aktivelement. Ebenso kann die Zwischenschicht 7 eine Platinschicht oder eine platinangereicherte MCrAlX-Schicht sein.

Figur 6 zeigt ein weiteres Ausführungsbeispiel eines erfindungsgemäß ausgebildeten Schichtsystems 1.
Im Vergleich zu Figur 1 ist keine Zwischenschicht 7 vorhanden, sondern die äußere poröse Schicht 10 liegt direkt auf der Oberfläche 9 des Substrats 4.

Das Material für die Schicht 10 ist beispielsweise aus Siliziumkarbid (SiC), Siliziumoxid (SiO₂), Siliziumnitrid (Si₃N₄) oder Faserwerkstoffen (CMC) bzw. Mischungen daraus.

Die Schicht 10 kann einstückig mit dem Substrat 4 oder der Zwischenschicht 7 ausgeführt sein, so dass keine Haftungsprobleme zwischen Schicht 10 und Substrat 4 existieren.

Die poröse Schicht 10 kann beispielsweise zusammen mit dem Substrat 4 in einem Guss oder durch andere schmelzmetallurgische Verfahren (epitaktisches Aufwachsen) hergestellt worden sein.
Dies bewirkt eine ideale Verbindung zwischen Substrat 4 und poröser Schicht 10 bezüglich Wärmeübertragung und mechanischer Festigkeit zwischen Substrat 4 und Schicht 10 oder Zwischenschicht 7.

Figur 7 zeigt eine vergrößerte Darstellung der äußeren Schicht 10, die sich in einer radialen Richtung 11 (senkrecht zum Substrat 4) erstreckt.
Hier grenzt die poröse Schicht 10 an den Bereich 110, 111 an, d.h. sie liegt auf der Oberfläche 9 des Substrats 4 auf.
Die folgenden Ausführungen bezüglich der Ausbildung der porösen Schicht 10 und die Anbindung an das Substrat 4 betreffen jedoch auch die Anordnung der porösen Schicht 10 auf dem Substrat 4 gemäss den Figuren 1, 2, 3 und 4.

Die äußere poröse Schicht 10 besteht aus vielen Poren 25. Die Porengröße variiert von etwa 0,5 bis mehrere Millimeter (≥ 2mm). Eine Pore 25 wird jeweils umschlossen von Porenwänden 22. Die Porenwände 22 der einzelnen benachbarten Poren 25 treffen sich in einer Wandschnittfläche 19. Durch die poröse Schicht 10 kann ein Kühlmedium KM strömen, indem es aus dem Inneren des Schichtsytems (hohle Turbinenschaufel, Innenseite Brennkammer) 1 herbeigeführt wird, muss aber nicht, da die poröse Schicht 10 als Wärmedämmschicht wirkt und so schon zur thermischen Entlastung des Substrats beiträgt.
Zwischen den Poren 25 können Kanäle 26 in den Porenwänden 22 vorhanden sein, durch die ein Kühlmedium KM strömen kann. Eine geschlängelte Pfeillinie zeigt, wie ein Kühlmedium vom Substrat 4 aus durch die poröse Schicht 10 strömen kann.
So kann das Kühlmedium KM beispielsweise die poröse Schicht 10 in Radialrichtung 11 durchströmen.
Soll das Kühlmedium KM die poröse Schicht 10 in Axialrichtung 17 durchströmen, sind die Kanäle 26 nicht notwendig.

Die Poren 25 weisen einen Porendurchmesser oder Porenweite 28 auf.
Die Poren 25 weisen in diesem Ausführungsbeispiel im Querschnitt senkrecht zur Radialrichtung 11 einen nahezu viereckigen oder rechtwinkligen Querschnitt auf.

Die poröse Schicht 10 ist beispielsweise so auf dem Substrat 4 oder einer Zwischenschicht 7 angeordnet, dass mehrere Wandschnittflächen 19 eine Kontaktfläche 37 mit dem Substrat 4 darstellen. Somit grenzt das Substrat 4 oder die Zwischenschicht 7 an Wandschnittflächen 19 und Poren 25.

Kanten der Porenwände 22, der Kanäle 26 oder der Wandschnittflächen 19 sind zumindest abgerundet, so dass Schmutzpartikel, die mit dem Kühlmedium in die poröse Schicht 10 gelangen, sich nicht an den Kanten verhaken können.

Die Porengröße 28 ist beispielsweise so groß auslegt, dass Fremdpartikel, die mit dem Kühlmedium die Schicht 10 durchströmen, die poröse Schicht 10 nicht verstopfen, d.h. die Porengröße 28 ist größer als die Größe der Fremdpartikel. Insbesondere weist die poröse Schicht 10 eine (Honig-) Wabenstruktur auf.

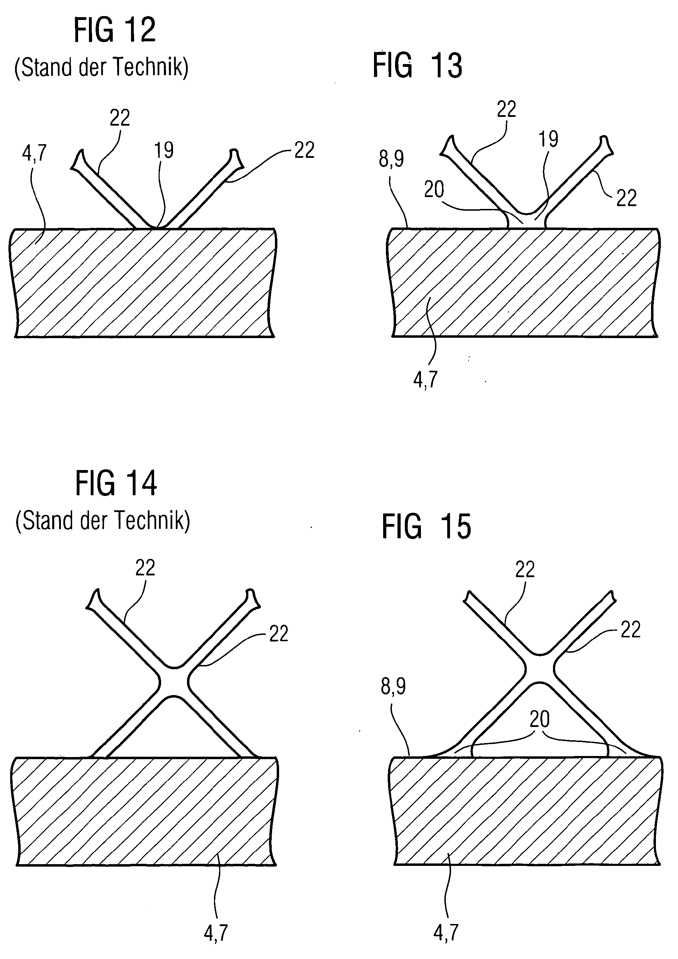

Ein Übergang 20 zwischen einer Porenwand 22 oder Wandschnittfläche 19 und dem Substrat 4 oder der Zwischenschicht 7 ist verbreitert und möglichst großflächig und mit großen Rundungsradien ausgeführt, um Thermospannungen und Kerbwirkungen zu reduzieren und um die Kontaktfläche 37 von Schicht 10 und Substrat 4 oder Zwischenschicht 7 zu vergrößern, so dass eine gute mechanische Anbindung und Wärmeübertragung der porösen Schicht 10 an das Substrat 4 oder die Zwischenschicht 7 gegeben ist.
Insbesondere ist die Kontaktfläche 37 der Schicht 10 mit dem Substrat 4 oder der Zwischenschicht 7 durch die Wandschnittfläche 19 gegeben (Fig. 12, Stand der Technik). Die Größe der Wandschnittfläche 19 ist erfindungsgemäß am Übergang 20 gegenüber dem Querschnitt der Wandschnittfläche dieser Pore 25 oberhalb des Übergangs 20 dementsprechend verbreitert (Fig. 13).
Wenn die Porenwände 22 die Kontaktfläche zum Substrat 4 oder der Zwischenschicht 7 bilden (Fig. 14, Stand der Technik), ist der Querschnitt des Übergangs 20 erfindungsgemäss verbreitert gegenüber der Dicke der Porenwand 22 oberhalb der Kontaktfläche (Fig. 15).

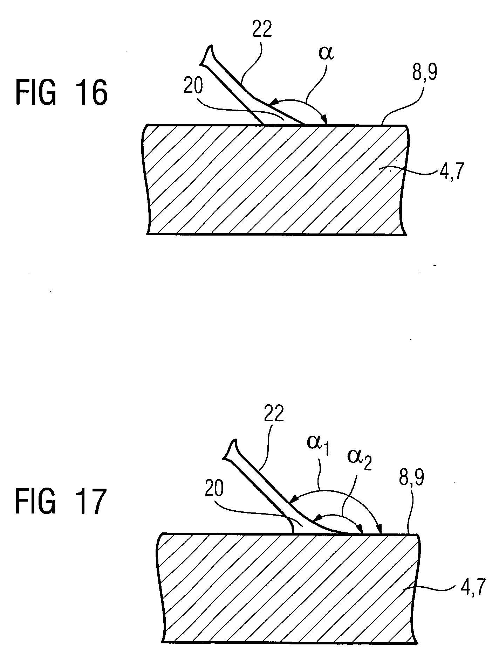

Die Verbreiterung des Übergangs 20 ist so ausgelegt, dass sich ein unstetiger (Fig. 16) (ein definierter Winkel α) oder stetiger Übergang (Fig. 17) (verschiedene Winkel α1, α2,..) von der Porenwand 22 zu der Oberfläche 9, 14 ergibt.

Die Oberfläche 9 des Substrats 4, die von der porösen Schicht 10 abgedeckt wird, ist somit großenteils (> 10%, insbesondere > 20% oder > 30%) mit den Wandschnittflächen 19 oder den Porenwänden 22 kontaktiert.

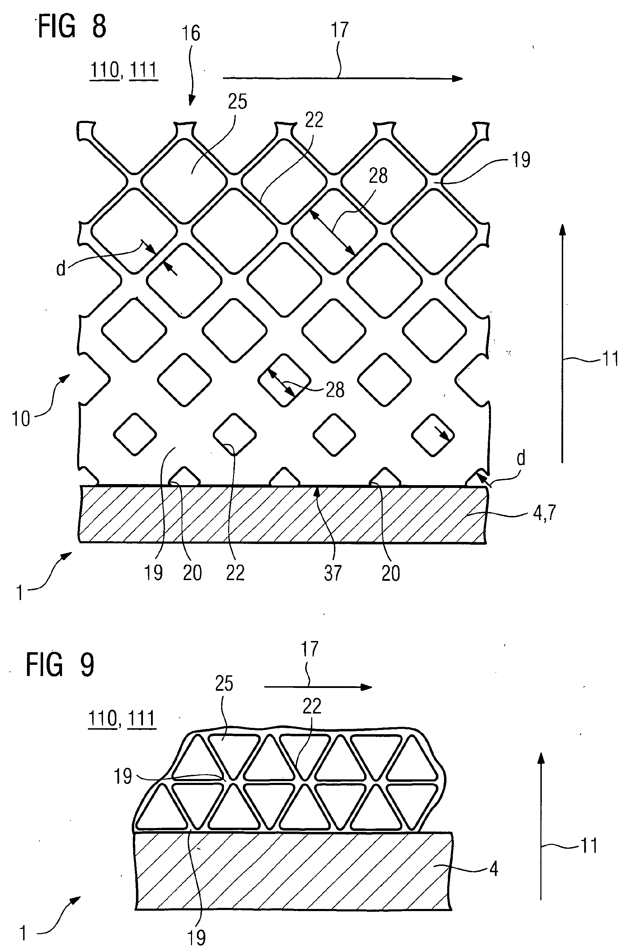

Figur 9 zeigt eine weitere Querschnittsform der Poren 25.
Der Querschnitt der Pore 25 ist beispielsweise dreieckförmig ausgebildet. Weitere Querschnittsformen sind denkbar.

Figur 8 zeigt ein weiteres Ausführungsbeispiel eines erfindungsgemäßen Schichtsystems 1.
Entlang der Radialrichtung 11 sind die Porenwände 22 in der Nähe des Substrats 4 oder der Zwischenschicht 7 dicker (Dicke, Durchmesser d) ausgeführt als in der Nähe der äußeren Oberfläche 16 der porösen Schicht 10. Somit ändert sich auch die Porenweite 28 in der Radialrichtung 11, die Porenweite 28 ist nämlich im Nahbereich des Substrats 4 kleiner als im Nahbereich der äußeren Oberfläche 16 des Substrats 4. Durch die dickeren Porenwände 22 in der Nähe des Substrats 4 oder der Zwischenschicht 7 wird eine größere Kontaktfläche 37 zwischen der porösen Schicht 10 und dem Substrat 4 geschaffen (> 10 % der Fläche, die von der porösen Schicht 10 überdeckt ist). Dies erhöht die mechanische Bindung und den Wärmeübergang der porösen Schicht 10 an das Substrat 4 oder an die Zwischenschicht 7.
Der Übergang 20 zwischen einer Porenwand 22 und dem Substrat 4 oder der Zwischenschicht 7 ist beispielsweise ebenfalls verbreitert (Fig. 13, 15, 16, 17).

Die poröse Schicht 10 kann auf bekannte Art und Weise separat hergestellt werden und beispielsweise durch Löten mit dem Substrat 4 verbunden werden.

Die poröse Schicht 10 kann aber auch direkt auf das Substrat 4 aufgebaut werden.

Die folgenden Ausführungen gelten für die Anordnung der Schicht 10 auf dem Substrat 4 gemäss der Figuren 1 bis 4. Generell gesehen stellt der Übergang 20 der Porenwände 22 oder der Wandschnittflächen 19 der Schicht 10 auf das massiv tragende Substrat 4 eine mechanische Schwachstelle dar. Insbesondere bei plötzlichen Temperaturschwankungen, wie sie beim Betrieb von Gas- oder Dampfturbinen nicht vermieden werden können, nimmt eine gleichmäßig dünne, poröse Struktur die neue Temperatur sehr viel schneller an als das massive Substrat 4. Damit verbunden sind unterschiedliche thermische Ausdehnungen dieser Bereiche, was im Übergangsbereich von Schicht 10 und Substrat 4 zu extrem hohen Spannungen führen kann. Durch die großflächige und massivere Ausgestaltung der Porenwände 22 in den Übergängen 20 treten solche Effekte nicht mehr oder nur stark vermindert auf.

Ein konstanter Querschnitt der Porenwände 22 entlang der Radialrichtung 11 würde auch den Wärmeleitungskühlwirkungsgrad reduzieren. Die gesamte eingeleitete Wärme muss von dem Heißgaskanal 110 über das Substrat 4 in die poröse Struktur 10 strömen, wo sie gleichmäßig an die Kühlluft abgegeben wird. Dadurch fließt durch die Porenwände 22 an der Oberfläche 14 des Substrats 4 am meisten Wärme und an der freien Oberfläche 16 weniger. Bleibt der Querschnitt der Porenwand 22 konstant, ändert sich der zugehörige Temperaturgradient in der porösen Schicht 10 analog zur fließenden Wärme, d.h. er ist in der Nähe der Oberfläche 9 groß und zur freien Oberfläche 16 hin kleiner. Da die Wärmeübertragung an die Kühlluft jedoch direkt von der Temperaturdifferenz zur porösen Struktur 10 abhängt, kann so insgesamt nur ein enger begrenztes Maß an Wärme an die Kühlluft übertragen werden.

Durch die dickeren Porenwände 22 in der Nähe des Substrats 4 wird die Querschnittsfläche für die Wärmeleitung vergrößert, so dass sich der Temperaturgradient in Radialrichtung 11 abflacht. Dadurch ist es möglich, den für eine effektive Kühlung erforderlichen Temperaturgradienten zwischen den Porenwänden 22 und einem durch die Poren 25 geführten Kühlmittel in weiten Bereichen an der porösen Schicht 10 auf einem möglichst hohen Niveau zu halten.

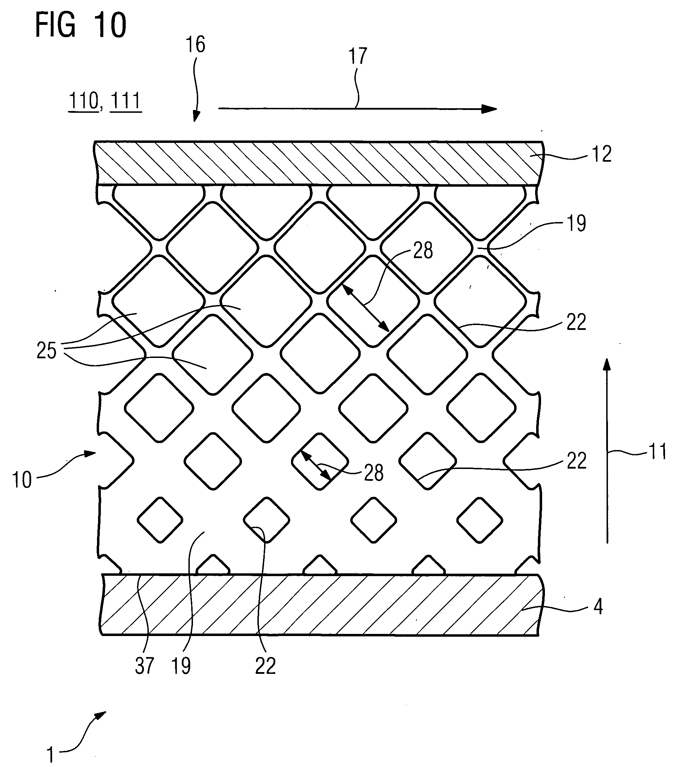

Figur 10 zeigt ausgehend von Figur 8 (analog aber auch zu Fig. 7, 9) ein weiteres Ausführungsbeispiel eines erfindungsgemäßen Schichtsystems 1.
Auf die poröse Schicht 10 ist eine Schutzschicht 12 aufgebracht.
Insbesondere wenn die poröse Schicht 10 eine metallische, beispielsweise eine MCrAlX-Schicht ist, besteht der Bedarf, die Schicht 10 noch zusätzlich vor weiterem Wärmeeintrag zu schützen. In dem Fall ist die Schutzschicht 12 eine keramische Wärmedämmschicht. Die keramische Wärmedämmschicht kann mittels bekannter Beschichtungsverfahren auf die poröse Schicht 10 aufgebracht werden.
Ebenso kann die Schutzschicht 12 Löcher (nicht dargestellt) aufweisen, aus denen ein Kühlmedium austreten kann (Filmkühlung).
Die Schutzschicht 12 kann auch eine Verschleißschicht darstellen.

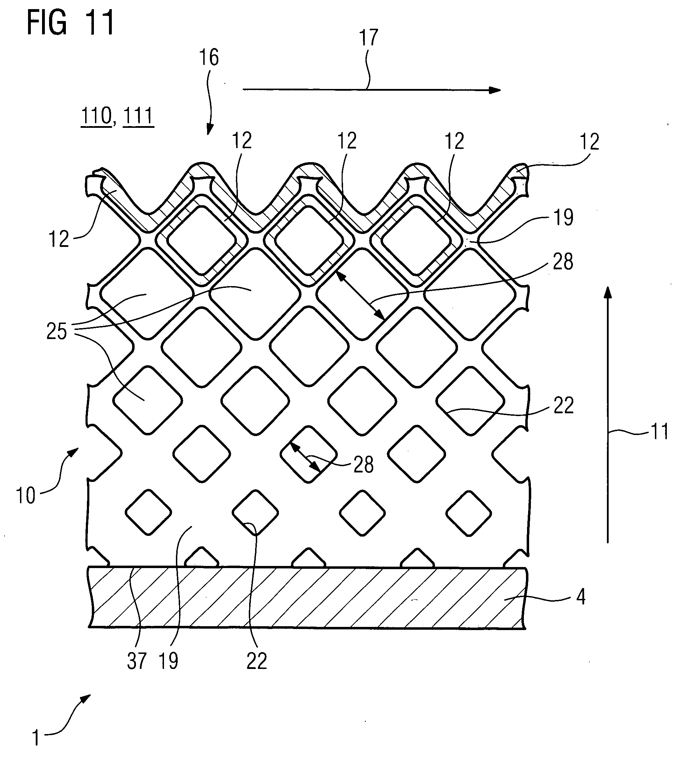

Figur 11 zeigt ein weiteres Ausführungsbeispiel eines erfindungsgemäßen Schichtsystems ausgehend von Figur 8 (analog aber auch zu Fig. 7, 9).
Auf die Porenwände 22 ist eine Schutzschicht 12 aufgebracht. Die Schutzschicht 12 stellt keine nur außen auf der Schicht 10 aufgebrachte Schicht dar, sondern bedeckt die äußeren Oberflächen und inneren Oberflächen der Poren 25. Die Schutzschicht 12 kann in einem äußeren Teil der porösen Schicht 10 aufgebracht sein oder kann sich auch bis zum Substrat 4 hin erstrecken.
Ebenso sind ggf. durch die Schutzschicht 12 hindurch gehende gasdurchlässige Verbindungen vorhanden, so dass ein Kühlmedium auch weiterhin aus der porösen Schicht 10 in einen Heißgaskanal austreten kann.

Die poröse Schicht 10 obiger Ausführungsbeispiele kann wie folgt hergestellt werden.
Beispielsweise mittels der Laserstereolithographie wird in einer ersten Schicht 10' beispielsweise aus Kunststoffpartikeln eine erste Negativform der porösen Schicht 10 hergestellt. Da die Struktur der porösen Schicht 10 beispielsweise in einem CAD-Modell vorhanden ist, kann die Schicht 10 virtuell in eine entsprechende Anzahl von Schichten zerlegt werden. Eine solche erste Schicht wird dann mittels der Laserstereolithographie hergestellt, die genau dort die Kunststoffpartikel miteinander durch Aushärten verbindet, wo Poren 25 und Kanäle 26 zwischen Poren 25 vorhanden sind.

Es können dann die weiteren Schichten separat hergestellt werden und miteinander verbunden werden oder auf die erste mit dem Laser behandelte Schicht werden ebenfalls wieder Kunststoffpartikel aufgebracht, die eine zweite Schicht auf der ersten Schicht ergeben. Die zweite Schicht wird dann ebenfalls mit dem Laser gezielt behandelt, so dass dort, wo der Laser auftrifft, die Kunststoffpartikel miteinander verbunden werden.
So wird Schicht für Schicht das gesamte Modell der Negativform der porösen Struktur 10 mittels des CAD-Modells aus Kunststoff aufgebaut. Andere Werkstoffe außer Kunststoff sind ebenso denkbar.

Das so erzeugte Negativ kann mit dem Material der porösen Schicht 10 ausgegossen oder aufgefüllt und verdichtet werden. Der Kunststoff wird dann beispielsweise durch Ausbrennen oder Auslaugen entfernt.

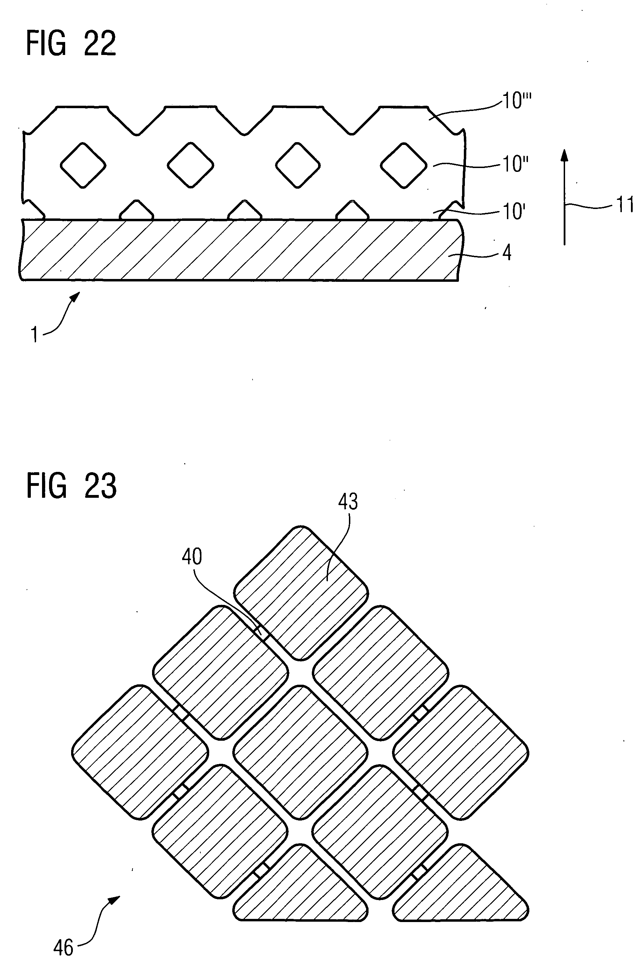

Ebenso ist es möglich, mittels der Laserstereolithographie ein Modell der porösen Schicht 10 (Figur 7, 8) so aufzubauen, dass durch Abformen des Modells eine Gussform 46 (Figur 23) entsteht und dann anschließend durch das Ausgießen der Gussform 46 die poröse Schicht 10 entsteht.
Die Gussform 46 besteht aus Volumenkörpern 43, den ausgefüllten Poren 25 und ggf. Stegen 40, die ausgefüllten Kanälen 26 entsprechen.

Weitere Verfahren zur Herstellung der porösen Schicht 10 sind denkbar.

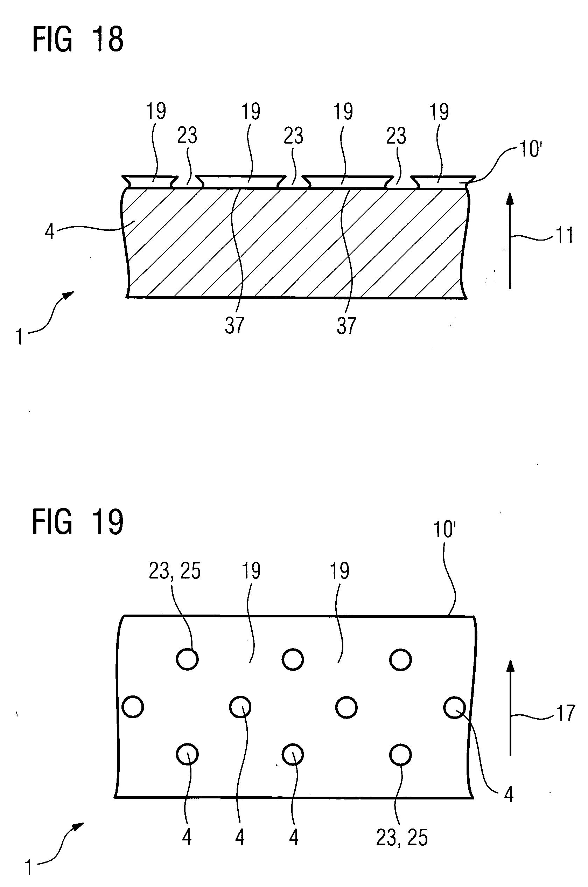

Insbesondere kann die poröse Schicht 10 schichtweise hergestellt (Fig. 18 bis Fig. 22, 24) werden.

In einem ersten Verfahrensschritt (Fig. 18) werden die Wandschnittflächen 19 auf das Substrat 4 aufgebracht, die die Kontaktfläche 37 mit dem Substrat 4 bilden. Somit wird ein erster Teil 10' der Schicht 10 gebildet.

Eine Draufsicht auf das Bauteil 1 gemäß Figur 18 (Fig. 19) zeigt, dass das Substrat 4 nur teilweise mit dem Material der Schicht 10 beschichtet ist. An den Stellen 23, an denen Poren 25 ausgebildet sein sollen, ist das Substrat 4 unbedeckt.

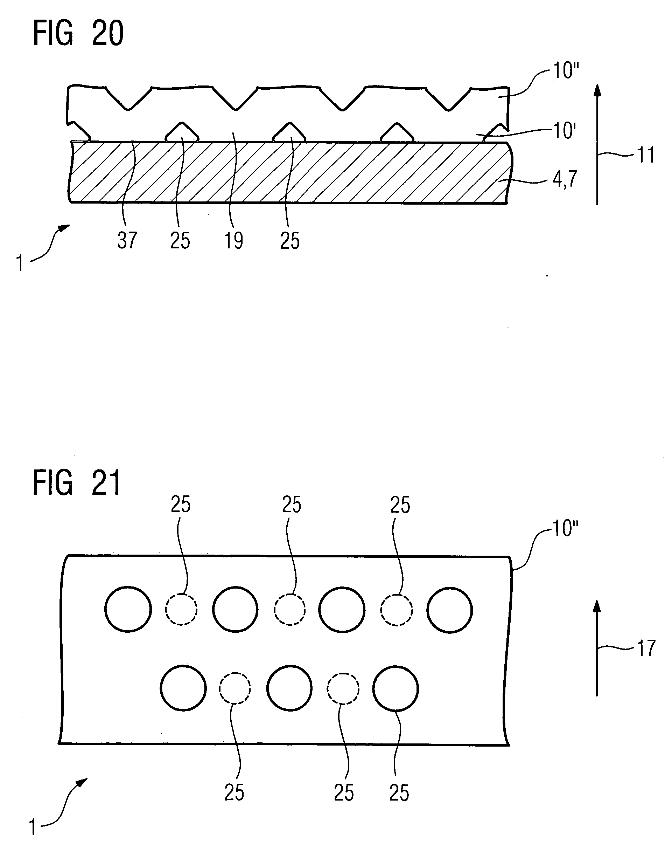

In einem weiteren Verfahrensschritt wird weiteres Material auf ein Schichtsystem 1 gemäß Figur 18 aufgebracht (Figur 20). Die Stellen 23 können beispielsweise mit einem anderen Material als dem Material der Schichten 10', 10'' aufgefüllt werden, um das Auffüllen zu verhindern. Dieses andere Material für die Stellen 23 ist auslaugbar oder ausbrennbar, wohingegen das Material der Porenwände 22 nicht in dieser Weise entfernbar ist.
Die unbeschichteten Stellen 23 gemäß des Behandlungsschritts gemäß Figur 18 sind nun verschlossen, so dass sich erste Poren 25 gebildet haben, die an das Substrat 4 angrenzen. Der Schichtbereich 10' ist um einen weiteren Schichtbereich 10'' ergänzt worden.

Eine Aufsicht (Fig. 21) auf ein Schichtsystem 1 gemäß Figur 20 zeigt Löcher in einer solchen Oberfläche, die nach einer weiteren Schichtaufbringung Poren 25 ergeben.
Gestrichelt angedeutet sind die Poren 25, die mittlerweile geschlossen worden sind. Diese Prozedur wird schrittweise (Fig. 22) weiterverfolgt, bis sich eine poröse Schicht 10 beispielsweise gemäß Figur 4 ergibt.

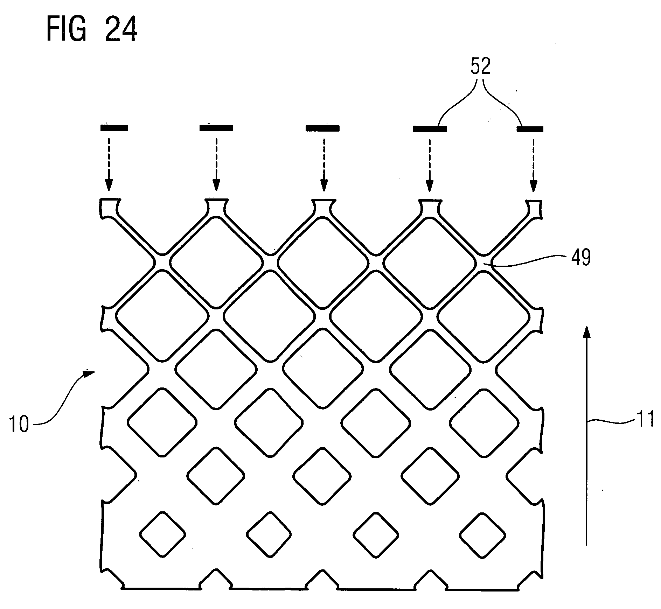

Figur 24 zeigt schematisch wie eine poröse Schicht 10 hergestellt werden kann, nämlich durch Drucken der porösen Struktur.
Hierbei wird, ähnlich wie bei der Stereolithographie, die Struktur aus einzelnen Schichten nacheinander aufgebaut, nur dass hier kein Laser Kunststoffpartikel miteinander verschmilzt, sondern es wird eine hauchdünne Druckpaste, die Material der Schicht 10 enthält, wie z.B. Farbe, Schicht für Schicht über die Folgeschicht 49 gedruckt. Dieses Verfahren ermöglicht, dass der Werkstoff der porösen Schicht direkt zum Drucken verwendet werden kann. Dabei ist der Werkstoff beispielsweise als feines Pulver mit einem Bindemittel versetzt.

Ist die poröse Schicht 10 fertig gedruckt, so wird das Bindemittel in einem Ofen ausgedampft und dann das Material der porösen Schicht 10 miteinander versintert. Die Verwendung eines Kunststoffkerns oder die Herstellung einer Gussform entfällt hier.

Die Figur 25 zeigt eine Gasturbine 100 in einem Längsteilschnitt.

Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 10,9. Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Um den dort herrschenden Temperaturen standzuhalten, werden diese mittels eines Kühlmittels gekühlt. Ebenso können die Schaufeln 120, 130 Beschichtungen gegen Korrosion (MCrAlX; M = Fe, Co, Ni, X=Y, Seltenen Erden) und Wärme (Wärmedämmschicht, beispielsweise ZrO₂, Y₂O₄-ZrO₂) aufweisen.
Im Inneren der Turbinenschaufeln 120, 130 kann eine poröse Schicht 10 beispielsweise gemäss Figur 1 bis 4 aufgebracht sein.
Ebenso kann die poröse Schicht 10 die Schaufel 120, 130 im Heißgaskanal 111 begrenzen.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Brennkammer 110 in Figur 26 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.
Im Inneren der Halteelemente ist dann eine poröse Schicht 10 beispielsweise gemäss Figur 1 bis 4 aufgebracht.
Ebenso kann die poröse Schicht 10 auch außen zu der Brennkammer 111 hin angeordnet sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

## Patentansprüche

1. Schichtsystem (1),
zumindest bestehend aus einem Substrat (4) und
einer zumindest teilweisen porösen Schicht (10) auf dem Substrat (4),
wobei eine Pore (25) der porösen Schicht (10) jeweils begrenzt ist durch Porenwände (22),
die (22) zum Teil an eine Oberfläche (9, 14) des Substrats (4) angrenzen,
**dadurch gekennzeichnet, dass**
die Porenwände (22),
die an die Oberfläche (9, 14) angrenzen,
im Bereich der Oberfläche (9, 14) des Substrats (4) eine vergrößerte Querschnittsfläche aufweisen im Vergleich zu den Porenwänden (22),
die nicht an den Bereich der Oberfläche (9, 14) angrenzen,
so dass sich eine verbesserte mechanische Anbindung der Porenwände (22) an das Substrat (4) ergibt.

2. Schichtsystem nach Anspruch 1,
**dadurch gekennzeichnet,**
**dass** das Schichtsystem (1) mit seinem Substrat (4) mit seiner Oberfläche (9) an einen Bereich (110, 111) angrenzt,
der ein heißes Medium aufweist, und
**dass** die poröse Schicht (10) auf der der Oberfläche (9) gegenüberliegenden Oberfläche (14) des Substrats (4) ausgebildet ist.

3. Schichtsystem nach Anspruch 1 oder 2,
**dadurch gekennzeichnet,**
**dass** das Schichtsystem (1) mit der Oberfläche (9) seines Substrats (4) einem heißen Medium aussetzbar ist,
das in einem Bereich (110, 111) vorhanden ist, und
**dass** die poröse Schicht (10) auf der Oberfläche (9) des Substrats (4) ausgebildet ist.

4. Schichtsystem nach Anspruch 1, 2 oder 3,
**dadurch gekennzeichnet,**
**dass** die Kontaktzonen zwischen Schicht (10) und Substrat (4) an der Oberfläche (9, 14) jeweils durch eine Wandschnittfläche (19) gebildet sind, und
**dass** der Größe der Wandschnittfläche (19) an der Oberfläche (9, 14) gegenüber der Wandschnittflächen (19), die nicht an den Bereich der Oberfläche (9, 14) angrenzen,
vergrößert ist,
so dass sich eine verbesserte mechanische Anbindung der Wandschnittfläche (19) an das Substrat (4) ergibt.

5. Schichtsystem nach Anspruch 1 oder 4,
**dadurch gekennzeichnet, dass**
eine Kontaktfläche der Porenwände (22) und/oder der Wandschnittflächen (19) mit dem Substrat (4) mindestens 10% der Oberfläche (9, 14) des Substrats (4) ausmacht, die von der porösen Schicht (10) bedeckt wird.

6. Schichtsystem nach Anspruch 1 oder 5,
**dadurch gekennzeichnet, dass**
die Dicke der Porenwände (22),
insbesondere in einer radialer Richtung (11),
die senkrecht zur Oberfläche des Substrats (4) verläuft, unterschiedlich ist.

7. Schichtsystem nach Anspruch 6,
**dadurch gekennzeichnet, dass**
die Dicke der Porenwände (22) einen Gradienten entlang der radialen Richtung (11) aufweist.'

8. Schichtsystem nach Anspruch 6 oder 7,
**dadurch gekennzeichnet, dass**
die Dicke der Porenwände (22) in der Nähe des Substrats (4) größer ist.

9. Schichtsystem nach Anspruch 6 oder 7,
**dadurch gekennzeichnet, dass**
die Dicke der Porenwände (22) ausgehend vom Substrat (4) hin zur äußeren Oberfläche (16) der porösen Schicht (10) größer ausgebildet ist.

10. Schichtsystem nach Anspruch 1, 6, 7, 8 oder 9,
**dadurch gekennzeichnet,**
**dass** sich eine radiale Richtung (11) ausgehend vom Substrat (4) hin zur äußeren Oberfläche (16) des Schichtsystems (1) erstreckt, und
**dass** die Porengrößen (28) der Poren (25) einen Gradienten entlang der radialen Richtung (11) aufweisen.

11. Schichtsystem nach Anspruch 10,
**dadurch gekennzeichnet, dass**
die Porengröße (28) in der Nähe des Substrats (4) kleiner ist als in der Nähe der äußeren Oberfläche (16) der porösen Schicht (10).

12. Schichtsystem nach Anspruch 1,
**dadurch gekennzeichnet, dass**
Kanten von Porenwänden (22) oder von Kanälen (26) in den Porenwänden (22) zumindest teilweise abgerundet sind.

13. Schichtsystem nach Anspruch 1,
**dadurch gekennzeichnet, dass**
die poröse Schicht (10) eine Wabenstruktur aufweist.

14. Schichtsystem nach Anspruch 1,
**dadurch gekennzeichnet, dass**
die poröse Schicht (10) eine von einem Kühlmedium zumindest teilweise durchströmbare Struktur aufweist.

15. Schichtsystem nach Anspruch 1,
**dadurch gekennzeichnet, dass**
die poröse Schicht (10) zumindest im Bereich der äußeren Oberfläche (16) der Schicht (10) zumindest eine Schutzschicht (12) aufweist.

16. Schichtsystem nach Anspruch 1 oder 15,
**dadurch gekennzeichnet, dass**
innerhalb der porösen Schicht (10) zumindest im Bereich der äußeren Oberfläche (16) zumindest eine Schutzschicht (12) aufgebracht ist.

17. Schichtsystem nach Anspruch 1 oder 15,
**dadurch gekennzeichnet, dass**
zumindest eine Schutzschicht (12) auf die Oberfläche (16) der porösen Schicht (10) aufgebracht ist.

18. Schichtsystem nach Anspruch 15, 16 oder 17,
**dadurch gekennzeichnet, dass**
die zumindest eine Schutzschicht (12) metallisch oder keramisch ist.

19. Schichtsystem nach Anspruch 15, 16, 17 oder 18,
**dadurch gekennzeichnet,**
**dass** die poröse Schicht (10) metallisch ist, und
**dass** die Schutzschicht (12) keramisch ist.

20. Schichtsystem nach Anspruch 1,
**dadurch gekennzeichnet, dass**
das Schichtsystem (1) ein Gas- oder Dampfturbinenbauteil, insbesondere eine Turbinenschaufel (120, 130) oder eine Brennkammerauskleidung (155), ist.

21. Schichtsystem nach Anspruch 1 oder 20,
**dadurch gekennzeichnet, dass**
das Substrat (4) metallisch ist,
insbesondere eine eisen-, nickel- oder kobaltbasierte Superlegierung.

22. Schichtsystem nach Anspruch 1 oder 18,
**dadurch gekennzeichnet, dass**
die poröse Schicht (10) keramisch ausgebildet ist.

23. Schichtsystem nach Anspruch 1,
**dadurch gekennzeichnet, dass**
die poröse Schicht (10) metallisch ist,
insbesondere die Zusammensetzung einer MCrAlX-Zusammensetzung aufweist,
wobei M für zumindest ein Element der Gruppe Eisen, Kobalt oder Nickel steht,
sowie X Yttrium und/oder zumindest ein Element der Seltenen Erden ist.

24. Schichtsystem nach Anspruch 1, 22 oder 23,
**dadurch gekennzeichnet, dass**
die poröse Schicht (10) mit dem Substrat (4) einstückig ausgebildet ist.

25. Schichtsystem nach Anspruch 1,
**dadurch gekennzeichnet, dass**
das Schichtsystem (1) Kühlkanäle (13, 26) in dem Substrat (4) und/oder in den Porenwänden (22) aufweist.

26. Schichtsystem nach Anspruch 1,
**dadurch gekennzeichnet, dass**
die Poren (25) der Schicht (10) eine Größe (28) aufweisen,
die größer ist als die Größe von Fremdpartikeln in einem Medium,
das die Schicht (10) durchströmt.

27. Verfahren zur Herstellung eines Schichtsystems (1) mit einer porösen Schicht (10), insbesondere nach Anspruch 1,
**dadurch gekennzeichnet, dass**
die poröse Schicht (10) in mehreren Teilschritten schichtweise hergestellt wird.

28. Verfahren nach Anspruch 27,
**dadurch gekennzeichnet, dass**
die äußere Oberfläche der porösen Schicht (10) mit dem Substrat (4) verbunden wird, insbesondere durch Löten.

29. Verfahren nach Anspruch 27,
**dadurch gekennzeichnet, dass**
die Stereolithographie, insbesondere die Laser-Stereolithographie verwendet wird,
um die poröse Schicht (10) herzustellen.

30. Verfahren nach Anspruch 27 oder 29,
**dadurch gekennzeichnet, dass**
schichtweise (10', 10'', 10''') Kunststoff oder ähnliches als Negativform auf das Substrat (4) aufgebracht wird, und mittels eines Lasers (20) erhärtet wird,
so dass sich die Poren (25) der porösen Schicht (10) ergeben,
die dann mit dem Material der Schicht (10) umfüllt, insbesondere umgossen werden,
so dass sich die poröse Schicht (10) ergibt.

31. Verfahren nach Anspruch 27 oder 29,
**dadurch gekennzeichnet, dass**
dass ein Modell der porösen Schicht (10), insbesondere aus Kunststoff, hergestellt wird,
von dem durch Abformen eine Gussform für die poröse Schicht (10) erstellt wird, und
dass die poröse Schicht (10) mit dieser Gussform hergestellt wird.

32. Verfahren nach Anspruch 27,
**dadurch gekennzeichnet, dass**
schichtweise Druckpaste,
die Material der Schicht (10) enthält,
so auf das Substrat (4) aufgebracht wird,
dass sich die poröse Schicht (10) und die Poren (25) ergeben.

33. Verfahren zur Herstellung eines Schichtsystems nach Anspruch 1,
**dadurch gekennzeichnet, dass**
die poröse Schicht (10) zusammen mit dem Substrat (4) hergestellt wird.

34. Verfahren nach Anspruch 33,
**dadurch gekennzeichnet, dass**
das Substrat (4) zusammen mit der porösen Schicht (10) schmelzmetallurgisch, insbesondere abgegossen, hergestellt wird.
